# EUROPEAN PATENT SPECIFICATION

(11) **EP 3 135 500 B1**
(45) Date of publication and mention of the grant of the patent: **01.05.2019**
(21) Application number: 16185292.6
(22) Date of filing: 23.08.2016
(51) Int. Cl.: B60C 1/00, C08L 7/00, C08L 9/00

(54) **TIRE WITH TREAD COMPOSITE**
REIFEN MIT REIFENLAUFFLÄCHENZUSAMMENSETZUNG
PNEUMATIQUE AVEC UNE COMPOSITION POUR BANDE DE ROULEMENT

(30) Priority: 28.08.2015 US 201514838707
(43) Date of publication of application: 01.03.2017
(73) Proprietor: The Goodyear Tire & Rubber Company, Akron, Ohio 44316 (US)
(72) Inventor: SANDSTROM, Paul Harry, Cuyahoga Falls, OH Ohio 44223 (US)
(74) Representative: Kutsch, Bernd

(56) References cited:
- EP-A1- 1 092 565
- EP-A1- 1 431 078
- EP-A1- 3 045 323
- US-A1- 2015 174 963
- DATABASE WPI Week 200611 Thomson Scientific, London, GB; AN 2006-103930 XP002763189, & JP 2005 336303 A (BRIDGESTONE CORP) 8 December 2005 (2005-12-08)

## Description

### Field of the Invention

The invention relates to a pneumatic tire, particularly a pneumatic truck tire, having a circumferential tread. The tread is preferably of a of cap/base construction comprising an outer tread cap rubber layer and an underlying tread base rubber layer. For the rubber composition of the tread, particularly the tread cap, it is desired to promote resistance to internal heat generation while substantially maintaining abrasion and tear resistance. This is of particular relevance for a tread of a vehicle for heavy duty service such as a truck.

### Background of the Invention

Vehicular truck tires often have rubber treads with an outer cap rubber layer designed to be ground contacting of a rubber composition having its elastomers comprised of a combination of natural cis 1,4-polyisoprene rubber to promote tread durability and polybutadiene rubber to promote stiffness and resistance to tread wear with its reinforcing filler being primarily rubber reinforcing carbon black.

It is desired to evaluate further promoting durability of such tire tread in a sense of resistance to internal heat generation during tire service while substantially maintaining, or possibly improving, its resistance to tread wear (e.g. resistance to abrasion resistance) and tear resistance.

For such undertaking, it is desired to evaluate use of a styrene/butadiene rubber together with a combination of natural cis 1,4-polyisoprene rubber and cis 1,4-polybutadiene rubber with reinforcing filler comprised of a combination of rubber reinforcing carbon black and precipitated silica together with silica coupler for the precipitated silica to achieve target property values.

For the styrene/butadiene rubber, it is desired to evaluate use of a non-functionalized or functionalized styrene/butadiene having a relatively low Tg to promote abrasion resistance for the tread rubber composition.

In the description of this invention, terms such as "compounded rubber", "rubber compound" and "compound", if used herein, refer to rubber compositions containing elastomers blended with various ingredients, including curatives such as sulfur and cure accelerators. The terms "elastomer" and "rubber" may be used herein interchangeably unless otherwise indicated. It is believed that such terms are well known to those having skill in such art.

The glass transition temperature of the elastomers is determined as a peak midpoint by a differential scanning calorimeter (DSC) at a temperature rate of increase of 10ºC per minute, according to ASTM D7426 or equivalent.

In this application, cis 1,4- polyisoprene rubber means a polyisoprene rubber having a cis 1,4 isomertic content greater than 92 percent, preferably greater than 95 percent such as 98 percent.

In this application, cis 1,4- polybutadiene rubber means a polybutadiene rubber having a cis 1,4 isomeric content greater than 92 percent, preferably greater than 95 percent such as 98 percent.

EP-A- 1 092 565 describes a tire with a silica-reinforced tread comprising trans 1,4-polybutadiene, solution SBR, polyisoprene, carbon black and silica.

JP-A- 2005-336303 describes a rubber composition comprising natural rubber, butadiene rubber and/or styrene/butadiene rubber together with silica and a silane coupling agent.

### Disclosure and Practice of the Invention

The invention relates to a tire in accordance with claim 1 and to a method in accordance with claim 14.

Dependent claims refer to preferred embodiments of the invention.

In accordance with a preferred embodiment of this invention, a pneumatic tire, preferably a pneumatic rubber truck tire, is provided having a circumferential rubber tread, preferably a rubber tread with an outer cap rubber layer, comprising, based on parts by weight per 100 parts by weight of the tread rubber (phr) or of the tread cap rubber respectively,
(A) 100 phr of diene-based elastomers, and
(B) 40 to 80, alternatively 50 to 70 phr of reinforcing filler comprising a combination of rubber reinforcing carbon black and silica, preferably precipitated silica (amorphous synthetic silica), comprising:
   (1) 20 to 40, alternately 25 to 35, phr of rubber reinforcing carbon black, and
   (2) 20 to 40, alternately 25 to 35, phr of silica or precipitated silica, wherein the silica is used in combination with a silica coupling agent having a moiety reactive with hydroxyl groups (e.g. silanol groups) on the silica and another different moiety interactive with carbon-to-carbon double bonds of said diene-based elastomers, wherein said diene-based elastomers comprise:
      (a) from 30 to 50 phr of cis 1,4- polyisoprene rubber (natural or synthetic cis 1,4-polyisoprene rubber),
      (b) 25 to 45 phr of cis 1,4-polybutadiene rubber (e.g. having
         a cis 1,4 isomeric content of at least 95 percent), and
      (c) 15 to 35 phr of styrene/butadiene rubber having a Tg in a range of from -60°C to -85°C, wherein said styrene/butadiene rubber comprises:
         (i) styrene/butadiene rubber (non-functionalized styrene/butadiene rubber), or
         (ii) functionalized styrene/butadiene rubber containing functional groups comprising at least one of siloxy, amine and thiol groups reactive with hydroxyl groups (e.g. silanol groups) on said silica.

A significant aspect of this invention is providing a tire with a tread intended for heavy duty use (e.g. for supporting a heavy load where internal heat generation may be promoted during tire service), such as for a truck tire where the tread is intended to be ground-contacting, is desired to meet target values of physical properties comprised of a combination of hot rebound, storage modulus G', abrasion resistance and tear resistance properties. To meet the target properties, such tread is provided with a rubber composition selectively comprising elastomers comprising natural rubber, cis 1,4-polybutadiene (desirably comprising a cis 1,4-isomeric content at least 95 percent) and styrene/butadiene elastomer (which may be a functionalized styrene/butadiene elastomer) having a low Tg in a range of from -60°C to -85°C and 40 to 80 phr of reinforcing filler comprising 20 to 40 phr of silica such as precipitated silica and 20 to 40 phr of rubber reinforcing carbon black together with silica coupler for the silica where the silica may be optionally pre-treated with the coupling agent.

In further accordance with this invention, a method is provided which comprises adding said silica or precipitated silica to said tire tread rubber composition prior to addition of said rubber reinforcing carbon black.

In additional accordance with said method, said coupling agent is also added to said rubber composition prior to addition of said rubber reinforcing carbon black.

In practice, said rubber reinforcing carbon black is preferably characterized by having an Iodine adsorption value (ASTM D1510) in a range of 75 to 160 g/kg, (which is indicative of a relatively small sized carbon black) together with a dibutylphthalate (DBP) value (ASTM D2414) in a range of 90 to 140, cc/100g (which is indicative of a higher structure carbon black). Representative of such small sized, high structure, rubber reinforcing carbon blacks are, for example, N100 and N200 ASTM designated rubber reinforcing carbon blacks.

Use of the small sized, high structure, rubber reinforcing carbon black(s) for the said tread or tread cap rubber, with such Iodine adsorption value range and DBP value range, is considered herein to be important in order to promote good abrasion resistance, and relatively high stiffness for the tire tread.

Examples of various rubber reinforcing carbon blacks together with their Iodine number values and DBP values, may be found in The Vanderbilt Rubber Handbook, (1990), 13th edition, Pages 416 through 419.

In one embodiment, the cis 1,4-polybutadiene rubber (desirably having a cis 1,4 isomeric content of at least 95 percent) may be, for example, a product of polymerization (homo-polymerization) of 1,3-butadiene monomer in an organic solvent in the presence of a catalyst composed of nickel octoate, triisobutylaluminum, hydrogen fluoride and parastyrenated diphenylamine as may be exemplified in US-A-5,451,646. Representative of such cis 1,4-polybutadiene rubber is, for example, Budene 1280™ from The Goodyear Tire & Rubber Company.

In one embodiment, the cis 1,4-polybutadiene rubber (desirably having a cis 1,4 isomeric content of at least 95 percent) may be, for example, a product of polymerization (homo-polymerizing) 1,3-butadiene monomer in an organic solvent in the presence of a neodymium catalyst (neodymium based catalyst instead of catalyst containing any of cobalt, titanium or lithium). Representative of such cis 1,4-polybutadiene rubber is, for example, Budene 1223™ from The Goodyear Tire & Rubber Company and from CB25™, CB10™, CB22™, CB24™ and CB29™ from the Lanxess Company.

The styrene/butadiene elastomer (non-functionalized and functionalized styrene/butadiene elastomer) has a relatively low styrene content in a range of from 14 to 20 percent to promote durability (e.g. abrasion resistance) for the tread rubber composition.

The functionalized styrene/butadiene may have end-chain or in-chain functional groups depending upon whether the functional groups are derived from polymerization initiation or termination compounds or by co-monomers. Usually the functionalized styrene/butadiene is end-functionalized with terminal functional groups.

Representative of such functional groups are, for example, at least one of siloxy, amine, thiol and carboxyl groups (e.g. siloxy, amine and/or thiol groups) reactive with hydroxyl groups (e.g. silanol groups) on the silica.

For example, a functionalized styrene-butadiene rubber may be prepared as disclosed in US-B-7,342,070.

In one embodiment, the styrene/butadiene elastomer (non-functionalized or functionalized elastomer) may be tin coupled which results in an increased molecular weight for the elastomer.

Tin coupled copolymers of styrene/butadiene may be prepared, for example, by introducing an organo tin coupling agent during the styrene/1,3-butadiene monomer copolymerization reaction in an organic solvent solution, usually at or near the end of the polymerization reaction. Such coupling of styrene/butadiene copolymers is well known to those having skill in such art.

Various organo tin compounds, may be used for the coupling of the elastomer. Representative of such compounds are, for example, alkyl tin trichloride, dialkyl tin dichloride, yielding variants of a tin coupled styrene/butadiene copolymer elastomer.

The precipitated silica for the reinforcing filler is a synthetic amorphous silica such as, for example, those obtained by the acidification of a soluble silicate (e.g., sodium silicate or a co-precipitation of a silicate and an aluminate). Such precipitated silicas are, in general, well known to those having skill in such art

The BET surface area of the silica or the synthetic silica (precipitated silica), as measured using nitrogen gas, may, for example, be in a range of 50 to 300, alternatively 120 to 200, square meters per gram.

The silica may also have a dibutylphthalate (DBP) absorption value in a range of, for example, 100 to 400, and usually 150 to 300 cc/g.

Various commercially available synthetic silicas, particularly precipitated silicas, may be considered for use in this invention such as, for example, only and without limitation, silicas commercially available from Solvay with designations of Zeosil 1165MP and Zeosil 165GR.

The silica reinforcement for the rubber tire tread is used with a coupling agent.

The coupling agents cause the silica to have a reinforcing effect on the rubber, many of which are generally known to those skilled in such art.

Such silica coupling agents, for example, may be blended with the rubber composition together with the precipitated silica, (and thereby combined with the precipitated silica in situ within the rubber composition), or pre-reacted (pre-treated) with the precipitated silica to form a composite thereof prior to addition of the composite to the rubber composition.

As indicated above, if the coupling agent and silica are added separately to the rubber mix during the rubber/silica mixing, or processing stage, it is considered that the coupling agent then combines in situ with the silica within the rubber composition.

For example, such silica coupling agents may, for example, be composed of an alkoxy silane which has a constituent component, or moiety, (the alkoxy portion) capable of reacting with the silica surface (e.g. hydroxyl groups on the silica surface) and, also, a constituent component, or moiety, capable of reacting with the rubber, particularly the aforesaid diene-based elastomers which contain carbon-to-carbon double bonds, or unsaturation. In this manner, the coupling agent acts as a connecting bridge between the precipitated silica and the diene-based elastomers to thereby promote reinforcement of the rubber composition with the precipitated silica.

Numerous coupling agents are taught for use in combining silica or precipitated silica and rubber such as, for example, silane coupling agents containing a polysulfide component, or structure, such as bis-(3-alkoxysilylalkl) polysulfide which contains an average from 2 to 4 (such as for example a range of from 2 to 2.4 or a range of from 3 to 4) connecting sulfur atoms in its polysulfidic bridge such as, for example, a bis-(3-triethoxysilylpropyl) polysulfide or may comprise an alkoxyorganomercaptosilane.

A usually desirable coupling agent comprises a bis-(3-ethoxysilylpropyl) polysulfide having from 2 to 4, with an average of from 2 to 2.6, or an average of from 3.4 to 3.8, connecting sulfur atoms in the polysulfide bridge. Such coupling agent having an average of from 2 to 2.6 connecting sulfur atoms in its polysulfidic bridge may be particularly desired in order to promote ease of processing, particularly mixing, the unvulcanized rubber composition.

For this invention, target physical property values for the sulfur cured rubber composition for the tire tread outer cap rubber layer are shown in the following Table A for promotion of its resistance to internal heat generation (hot rebound and storage modulus (G') values), while substantially maintaining or improving (by increasing) wear resistance (Grosch rate of abrasion) and maintaining or improving (by increasing) tear resistance values.

**Table A**

| Tread Cap Rubber | |
|---|---|
| Hot rebound (100°C rebound) of cured rubber | >65 |
| Grosch abrasion rate (medium severity), of cured rubber, mg/km | <100 |
| Dynamic storage modulus G', 100°C, 10% strain, (e.g. stiffness), of cured rubber (kPa) | >1250 |
| Original tear strength of cured rubber, 95°C, N | >100 |
| Aged tear strength of cured rubber, 95°C, N (7 days at 70°C in air), an optional target property | >75 |

It is readily understood by those having skill in the art that the rubber compositions of the tread would be compounded with conventional compounding ingredients including the aforesaid reinforcing fillers such as carbon black and precipitated silica, as hereinbefore defined, in combination with a silica coupling agent, as well as antidegradant(s), processing oils, fatty acid comprised of, for example, stearic, oleic and palmitic acids, zinc oxide, sulfur-contributing material(s) and vulcanization accelerator(s).

Processing aids may be used, for example, waxes such as microcrystalline and paraffinic waxes, in a range, for example, of 1 to 5 phr or 1 to 3 phr; and resins, usually as tackifiers, such as, for example, synthetic hydrocarbon and natural resins in a range of, for example, 1 to 5 phr or 1 to 3 phr. A curative might be classified as sulfur together with one or more sulfur cure accelerator(s). In a sulfur and accelerator(s) curative, the amount of sulfur used may be, for example, from 0.5 to 5 phr, more usually in a range of 0.5 to 3 phr; and the accelerator(s), often of the sulfenamide type, is (are) used in a range of 0.5 to 5 phr, often in a range of 1 to 2 phr. The ingredients, including the elastomers but exclusive of sulfur and accelerator curatives, are normally first mixed together in a series of at least two sequential mixing stages, although sometimes one mixing stage might be used, to a temperature in a range of, for example, 145°C to 185°C, and such mixing stages are typically referred to as non-productive mixing stages. Thereafter, the sulfur and accelerators, and possibly one or more retarders and possibly one or more antidegradants, are mixed therewith to a temperature of, for example, 90°C to 120°C and is typically referred as a productive mix stage.

After mixing, the compounded rubber can be fabricated such as, for example, by extrusion through a suitable die to form a tire tread. The tire tread is then typically built onto a sulfur curable tire carcass and the assembly thereof cured in a suitable mold under conditions of elevated temperature and pressure by methods well-known to those having skill in such art.

The invention may be better understood by reference to the following example in which the parts and percentages are by weight unless otherwise indicated.

### COMPARATIVE EXAMPLE

Rubber compositions were prepared to evaluate reinforcing filler lever for working toward achieving the target physical property values for the sulfur cured rubber composition for a tire tread outer cap rubber layer illustrated in the aforesaid Table A.

Elastomers used were composed of a weight ratio of 50/50 of natural rubber (cis 1,4-polyisoprene) to cis 1,4-polybutadiene rubber.

In this first evaluation comparative example, filler reinforcement was composed of rubber reinforcing carbon black and precipitated silica both individually and as combinations thereof in weight ratios ranging from 50/10 to 10/50 to establish the optimum ratios of reinforcing fillers for obtaining the targeted property goals shown in Table A.

The basic formulation is illustrated in the following Table 1 which is presented in terms of parts per 100 parts by weight of rubber (phr).

As previously indicated, the rubber compositions may be prepared by mixing the elastomers(s) without sulfur and sulfur cure accelerators in a first non-productive mixing stage (NP-1) in an internal rubber mixer for 4 minutes to a temperature of 160°C. If desired, the rubber mixture may then be mixed in a second non-productive mixing stage (NP-2) in an internal rubber mixer for 4 minutes to a temperature of 160°C while adding additional ingredients if desired. The resulting rubber mixture may then be mixed in a productive mixing stage (PR) in an internal rubber mixer with sulfur and sulfur cure accelerator(s) for 2 minutes to a temperature of 110°C. The rubber composition may then be sheeted out and cooled to below 50°C between each of the non-productive mixing steps and prior to the productive mixing step. Such rubber mixing procedure is well known to those having skill in such art.

**Table 1**

| First Non-Productive Mixing Step (NP1) - Mixed to 160°C | Parts (phr) |
|---|---|
| Natural cis 1,4-polyisoprene rubber (TSR20)¹ | 50 |
| Cis 1,4-polybutadiene rubber² | 50 |
| Silica, precipitated³ | 10 to 30 |
| Carbon black⁴ | 10 to 60 |
| Processing oil | 10 |
| Fatty acid⁶ | 3 |
| Zinc oxide | 3 |
| | |

| Second Non-Productive Mixing Step (NP2) - Mixed to 160°C | |
|---|---|
| Silica, precipitated³ | 10 to 30 |
| Silica coupling agent⁵ | 1 to 6 |
| Antioxidants | 3 |
| Wax, microcrystalline and paraffin, and processing oil | 5 |
| | |

| Productive Mixing Step (PR) - Mixed to 110°C | |
|---|---|
| Sulfur | 1.5 to 2 |
| Accelerator(s)⁷ | 0.8 to 2.4 |

| | |
|---|---|
| ¹Natural rubber ²Cis 1,4-polybutadiene rubber Budene 1207™ from The Goodyear Tire & Rubber Company having a Tg of -105°C ³Precipitated silica as Zeosil™ Z1165 MP from Solvay ⁴Rubber reinforcing carbon black as N121, an ASTM designation ⁵Silica coupling agent comprised of bis(3-triethoxysilylpropyl) polysulfide having an average of from 2 to 2.6 connecting sulfur atoms as Si266™ from Evonik ⁶Mixture comprised of stearic, palmitic and oleic acids ⁷Sulfenamide and diphenyl guanidine sulfur cure accelerators | |

The following Table 2 represents the uncured and cure behavior and various physical properties of the rubber compositions based upon the basic formulation of Table 1, and reported as rubber Samples A through G. Test samples were cured for 32 minutes at 150°C.

**Table 2**

| | Samples | | | | | | |
|---|---|---|---|---|---|---|---|
| | A | B | C | D | E | F | G |
| Natural cis 1,4-polyisoprene | 50 | 50 | 50 | 50 | 50 | 50 | 50 |
| Cis 1,4-polybutadiene rubber | 50 | 50 | 50 | 50 | 50 | 50 | 50 |
| Rubber reinforcing carbon black | 60 | 50 | 40 | 30 | 20 | 10 | 0 |
| Precipitated silica | 0 | 10 | 20 | 30 | 40 | 50 | 60 |
| Silica coupling agent | 0 | 1 | 2 | 3 | 4 | 5 | 6 |
| | | | | | | | |

| Properties | | | | | | | |
|---|---|---|---|---|---|---|---|
| RPA test (Rubber Process Analyzer). Storaqe Modulus (G') kPa | | | | | | | |
| Uncured G', 15% strain 0.83 Hertz, 100°C | 227 | 212 | 187 | 179 | 168 | 164 | 165 |
| Cured G', 10% strain, 1 Hertz, 100°C, kPa | 1527 | 1418 | 1406 | 1451 | 1577 | 1784 | 2086 |
| Tan Delta, 10% strain, 1 Hertz, 100°C | 0.15 | 0.13 | 0.11 | 0.1 | 0.1 | 0.1 | 0.11 |
| | | | | | | | |

| MDR test: 120 minutes at 150°C | | | | | | | |
|---|---|---|---|---|---|---|---|
| Maximum torque (dN-m) | 18.4 | 17 | 17.1 | 17.4 | 18.3 | 20.1 | 24.1 |
| Delta torque (dN-m) | 15.3 | 14.3 | 14.7 | 15.3 | 16.3 | 18 | 21.9 |
| T90 (minutes) | 22.2 | 16.2 | 14.1 | 14 | 14.1 | 15.4 | 17.4 |
| | | | | | | | |

| Stress-strain | | | | | | | |
|---|---|---|---|---|---|---|---|
| Tensile strength (MPa) | 20.9 | 21.4 | 21.1 | 20.4 | 20.4 | 19.1 | 18.9 |
| Elongation at break (%) | 495 | 518 | 519 | 523 | 533 | 525 | 524 |
| 300% modulus, ring, (MPa) | 11.6 | 11.1 | 10.9 | 10.5 | 10.4 | 10.1 | 10.2 |
| | | | | | | | |

| Rebound (Zwick) | | | | | | | |
|---|---|---|---|---|---|---|---|
| 23°C | 40 | 44 | 46 | 49 | 49 | 49 | 48 |
| 100°C | 56 | 60 | 63 | 65 | 66 | 66 | 65 |
| | | | | | | | |
| Tear resistance (N) | 101 | 109 | 103 | 97 | 79 | 72 | 72 |
| Abrasion rate, Grosch, medium severity, mg/km² | 94 | 104 | 108 | 107 | 98 | 95 | 97 |

| | | | | | | | |
|---|---|---|---|---|---|---|---|
| ¹Data obtained according to a tear strength (peal adhesion) test to determine interfacial adhesion between two samples of a rubber composition. In particular, such interfacial adhesion is determined by pulling one rubber composition away from the other at a right angle to the untorn test specimen with the two ends of the rubber compositions being pulled apart at a 180° angle to each other using an Instron instrument at 95°C and reported as Newtons force. ²The Grosch abrasion rate run on an LAT-100 Abrader and is measured in terms of mg/km of rubber abraded away. The test rubber sample is placed at a slip angle under constant load (Newtons) as it traverses a given distance on a rotating abrasive disk (disk from HB Schleifmittel GmbH). In practice, a low abrasion severity test may be run, for example, at a load of 20 Newtons, 2° slip angle, disk speed of 40 km/hr for a distance of 7,500 meters; a medium abrasion severity test may be run, for example, at a load of 40 Newtons, 6° slip angle, disk speed of 20 km/hr and distance of 1,000 meters; | | | | | | | |

It can be seen from Table 2 that rubber Sample D with a carbon black/silica reinforcing filler ratio of 30/30 came the closest to matching the desired target property values of rebound at 100°C above 65, Grosch abrasion rate below 100 mg/km, dynamic storage modulus above 1250 kPa and tear resistance above 100.

It can be seen that higher levels of carbon black (above 30 phr) gave lower hot rebound (100°C) values (below the target value of 65) and higher levels of precipitated silica (above 30 phr) gave lower tear resistance (below the target value of 100 Newtons).

The next step for the evaluation is to establish an appropriate selection and levels of elastomers as an improvement of the combination of natural rubber and cis 1,4-polybutadiene rubber used in this Comparative Example for more adequately meeting the target property values when using the reinforcing filler comprised of precipitated silica and rubber reinforcing carbon black ratio of the optimized value of 30/30.

### EXAMPLE I

Rubber compositions were further prepared to evaluate rubber compositions for the tread cap rubber layer (outer tread rubber layer).

For this further evaluation, a functionalized styrene/butadiene rubber was used in combination with the natural rubber and cis 1,4-polybutadiene used in the Comparative Example.

Reinforcing filler composed of 30/30 parts by weight of rubber reinforcing carbon black (N121) to precipitated silica was used (together with the silica coupler for the precipitated silica.

The rubber compositions are referred in this Example I as rubber Samples H, I, J and K.

The basic rubber composition formulation is shown in Table 3 and the ingredients are expressed in parts by weight per 100 parts rubber (phr) unless otherwise indicated.

The rubber compositions may be prepared according to the method used for the Comparative Example. The respective ingredients are the ingredients used for the Comparative Example except for the addition of the functionalized styrene/butadiene rubber.

**Table 3**

| First Non-Productive Mixing Step (NP1) - Mixed to 160°C | Parts (phr) |
|---|---|
| Natural cis 1,4-polyisoprene rubber (TSR20) | 45 |
| Cis 1,4-polybutadiene rubber | 15 to 35 |
| Styrene/butadiene rubber⁸ | 20 to 40 |
| Silica, precipitated | 30 |
| Silica coupling agent | 3 |
| Wax microcrystalline and paraffin and processing oil | 8.5 |
| Fatty acid | 2.5 |
| Zinc oxide | 3 |

| Second Non-Productive Mixing Step (NP2) - Mixed to 160°C | |
|---|---|
| Carbon black | 30 |
| Antioxidants | 2 |
| Resin⁹ | 4 |
| | |

| Productive Mixing Step (PR) - Mixed to 110°C | |
|---|---|
| Sulfur | 1.3 |
| Accelerator(s)⁷ | 2.1 |

| | |
|---|---|
| ⁸Tin coupled functionalized styrene/butadiene rubber as SLR3402™ from the Trinseo Company containing at least one functional group comprised of at least one of siloxy and thiol groups, having a Tg of -65°C and a styrene content of 15 percent ⁹Styrene-alphamethylstyrene resin | |

The following Table 4 represents the uncured and cure behavior and various physical properties of the rubber compositions based upon the basic formulation of Table 3, and reported as rubber Samples H, I, J and K.

**Table 4**

| | Samples | | | |
|---|---|---|---|---|
| | H | I | J | K |
| Natural rubber | 45 | 45 | 45 | 45 |
| Cis-1,4-polybutadiene rubber | 35 | 30 | 25 | 20 |
| Functionalized styrene/butadiene rubber | 20 | 25 | 30 | 35 |

| Properties | | | | |
|---|---|---|---|---|
| RPA test (Rubber Process Analyzer), Storage Modulus (G') kPa | | | | |
| Uncured G', 15% strain 0.83 Hertz, 100°C | 193 | 201 | 213 | 223 |
| Cured G', 10% strain, 1 Hertz, 100°C, kPa | 1280 | 1256 | 1295 | 1290 |
| Tan delta, 10% strain, 1 Hertz, 100°C | 0.115 | 0.114 | 0.116 | 0.112 |
| | | | | |

| MDR test: 60 minutes at 150°C | | | | |
|---|---|---|---|---|
| Maximum torque (dN-m) | 18.4 | 17.9 | 18.4 | 17.9 |
| Delta torque (dN-m) | 15.9 | 15.4 | 15.7 | 15.3 |
| T90 (minutes) | 9.5 | 9.7 | 9.4 | 9.9 |
| | | | | |

| Stress-strain | | | | |
|---|---|---|---|---|
| Tensile strength (MPa) | 20.1 | 20.4 | 19.8 | 19.7 |
| Elongation at break (%) | 483 | 494 | 464 | 468 |
| 300% modulus, ring, (MPa) | 11.2 | 10.9 | 11.6 | 11.3 |
| | | | | |

| Rebound (Zwick) | | | | |
|---|---|---|---|---|
| 23°C | 55 | 54 | 54 | 54 |
| 100°C | 68 | 68 | 69 | 68 |
| | | | | |

| Tear Strength¹, N. 95°C | | | | |
|---|---|---|---|---|
| Original | 102 | 103 | 88 | 87 |
| Aged 7 days at 70°C in air | 80 | 79 | 71 | 70 |
| Abrasion rate, Grosch, medium severity (mg/km)² | 90 | 93 | 97 | 103 |

It can be seen from Table 4 that experimental rubber Samples H and I met all of the cured target property values, (rebound at 100°C above 65, Grosch abrasion below 100 mg/km, dynamic storage modulus above 1250 kPa, tear strength, or resistance, above 100 Newtons original and aged tear resistance above 75 Newtons) whereas Sample J was deficient in tear strength and Sample K was deficient in both tear strength and abrasion target property values.

These results indicate that the optimum level of the functionalized SBR in a blend with natural rubber (natural cis 1,4-polybutadiene) and cis 1,4-polybutadiene is in the range of 20 to 25 phr as illustrated in Experimental rubber Samples H and I.

### EXAMPLE II

Rubber compositions were prepared to evaluate the rubber composition and filler levels of Sample H of Example I, wherein a comparison was made of the functionalized styrene/butadiene rubber with a non-functionalized styrene/butadiene rubber.

For this Example II, experimental rubber Sample L contained a non-functionalized styrene/butadiene rubber and experimental rubber Sample M contained a functionalized styrene/butadiene rubber as was evaluated in Example I.

The rubber composition formulations for Samples L and M are shown in Table 5 and the ingredients are expressed in parts by weight per 100 parts rubber (phr) unless otherwise indicated and were the ingredients reported for Example I.

The rubber compositions may be prepared by the method of the Comparative Example with ingredients identified in the preceding Examples, except for the non-functionalized styrene/butadiene rubber.

**Table 5**

| First Non-Productive Mixing Step (NP1) - Mixed to 160°C | Parts (phr) |
|---|---|
| Natural cis 1,4-polyisoprene rubber (TSR20) | 45 |
| Cis 1,4-polybutadiene rubber | 35 |
| Non-functionalized styrene/butadiene rubber¹⁰ | 0 or 20 |
| Functionalized styrene/butadiene rubber⁸ | 0 or 20 |
| Carbon black, rubber reinforcing (N121) | 30 |
| Wax microcrystalline and paraffin and processing oil | 8.5 |
| Fatty acid | 2.5 |
| Zinc oxide | 3 |
| | |

| Second Non-Productive Mixing Step (NP2) - Mixed to 160°C | |
|---|---|
| Silica, precipitated | 30 |
| Silica coupling agent | 3 |
| Antioxidants | 2 |
| Resin⁹ | 4 |
| | |

| Productive Mixing Step (PR) - Mixed to 110°C | |
|---|---|
| Sulfur | 1.3 |
| Accelerator(s) | 2.1 |

| | |
|---|---|
| ¹⁰Non-functionalized styrene/butadiene rubber as SLF18B10™ from the Goodyear Tire and Rubber Co, having a Tg of -70°C and a styrene content of 18 percent | |

The following Table 6 represents the uncured and cure behavior and various physical properties of the rubber compositions based upon the basic formulation of Table 5, and reported as rubber Samples L and M.

**Table 6**

| | Samples | |
|---|---|---|
| | L | M |
| Natural rubber | 45 | 45 |
| Cis-1,4-polybutadiene rubber | 35 | 35 |
| Non-functionalized styrene/butadiene rubber | 20 | 0 |
| Functionalized styrene/butadiene rubber | 0 | 20 |
| | | |

| Properties | | |
|---|---|---|
| RPA test (Rubber Process Analyzer), Storage Modulus (G') kPa | | |
| Uncured G', 15% strain 0.83 Hertz, 100°C | 189 | 204 |
| Cured G', 10% strain, 1 Hertz, 100°C, kPa | 1940 | 1938 |
| Tan delta, 10% strain, 1 Hertz, 100°C | 0.093 | 0.085 |
| | | |

| MDR test: 60 minutes at 150°C | | |
|---|---|---|
| Maximum torque (dN-m) | 17 | 18.4 |
| Delta torque (dN-m) | 14.5 | 14.7 |
| T90 (minutes) | 11.5 | 11.1 |
| | | |

| Stress-strain | | |
|---|---|---|
| Tensile strength (MPa) | 18.2 | 18.9 |
| Elongation at break (%) | 511 | 506 |
| 300% modulus, ring, (MPa) | 9.5 | 9.8 |
| | | |

| Rebound (Zwick) | | |
|---|---|---|
| 23°C | 51 | 54 |
| 100°C | 66 | 67 |

| Tear Strength¹, N. 95°C | | |
|---|---|---|
| Original | 112 | 107 |
| Aged 7 days at 70°C in air | 84 | 88 |
| | | |
| Abrasion rate, Grosch² medium severity (mg/km) | 78 | 76 |

It can be seen from Table 6 that experimental rubber Samples L and M met all of the target cured properties relative to rebound, stiffness, tear resistance and rate of abrasion.

Experimental rubber Sample M, containing the functionalized styrene/butadiene rubber shows a small advantage in its reported somewhat higher hot rebound value of 67 taken with a significantly lower tan delta value of 0.085. This is indicative of a somewhat improved (reduced) hysteresis and thereby predictive of greater resistance to internal heat generation of the rubber composition during service.

Therefore, a desirable styrene/butadiene rubber for such rubber composition is the functionalized styrene/butadiene rubber.

### EXAMPLE III

Rubber Sample M of Example II was selected to evaluate a desirable order of addition of the silica reinforcing filler to the rubber composition.

Rubber Samples N and O were provided.

For experimental rubber Sample N, a delayed addition of the precipitated silica was provided by adding the precipitated silica in the second non-productive mixing stage and thereby subsequent to the carbon black addition which had been added in the first non-productive mixing stage.

For Experimental rubber Sample O, a delayed addition of the carbon black was provided by adding the carbon black in the second non-productive mixing stage and thereby subsequent to the precipitated silica addition which had been added in the first non-productive mixing stage.

The basic rubber composition formulation is shown in Table 7 and the ingredients are expressed in parts by weight per 100 parts rubber (phr) unless otherwise indicated.

The rubber compositions may be prepared by the method of the Comparative Example with ingredients identified in the preceding Examples.

**Table 7**

| First Non-Productive Mixinq Step (NP1) - Mixed to 160°C | Parts (phr) |
|---|---|
| Natural cis 1,4-polyisoprene rubber (TSR20) | 45 |
| Cis 1,4-polybutadiene rubber | 35 |
| Functionalized styrene/butadiene rubber | 20 |
| Carbon black, rubber reinforcing (N121) | 0 or 30 |
| Silica, precipitated | 0 or 30 |
| Silica coupling agent | 0 or 3 |
| Wax, microcrystalline and paraffin, and processing oil | 8.5 |
| Fatty acid | 2.5 |
| Zinc oxide | 3 |
| | |

| Second Non-Productive Mixing Step (NP2) - Mixed to 160°C | |
|---|---|
| Silica, precipitated⁴ | 0 or 30 |
| Silica coupling agent | 0 or 3 |
| Carbon black | 0 or 30 |
| Antioxidants | 2 |
| Resin⁹ | 4 |
| | |

| Productive Mixing Step (PR) - Mixed to 110°C | |
|---|---|
| Sulfur | 1.3 |
| Accelerator(s) | 2.1 |

The ingredients are those referred to in the preceding examples.

The following Table 8 represents the uncured and cure behavior and various physical properties of the rubber compositions based upon the basic formulation of Table 7, and reported as rubber Samples N and O.

**Table 8**

| | Samples | |
|---|---|---|
| | N | O |
| Natural rubber | 45 | 45 |
| Cis 1,4-Polybutadiene | 30 | 30 |
| Functionalized styrene/butadiene rubber | 20 | 20 |
| Silica addition in NP1 mixing stage | 0 | 30 |
| Silica delayed addition in NP2 mixing stage | 30 | 0 |
| Coupling agent delayed addition in NP2 mixing stage | 3 | 0 |
| Coupling agent addition in NP1 mixing stage | 0 | 3 |
| Carbon black addition in NP1 mixing stage | 30 | 0 |
| Carbon black delayed addition in NP2 mixing stage | 0 | 30 |
| | | |

| Properties | | |
|---|---|---|
| RPA test (Rubber Process Analyzer), Storage Modulus (G') kPa | | |
| Uncured G', 15% strain 0.83 Hertz, 100°C | 204 | 215 |
| Cured G', 10% strain, 1 Hertz, 100°C, kPa | 1938 | 1951 |
| Tan delta, 10% strain, 1 Hertz, 100°C | 0.085 | 0.087 |
| | | |

| MDR test: 60 minutes at 150°C | | |
|---|---|---|
| Maximum torque (dN-m) | 17.4 | 17.6 |
| Delta torque (dN-m) | 14.7 | 14.6 |
| T90 (minutes) | 11.1 | 10.3 |
| | | |

| Stress-strain | | |
|---|---|---|
| Tensile strength (MPa) | 18.9 | 18.9 |
| Elongation at break (%) | 506 | 503 |
| 300% modulus, ring, (MPa) | 9.8 | 9.9 |
| | | |

| Rebound (Zwick) | | |
|---|---|---|
| 23°C | 54 | 55 |
| 100°C | 67 | 69 |
| | | |

| Tear Strength¹, N. 95°C | | |
|---|---|---|
| Original | 107 | 107 |
| Aged 7 days at 70°C in air | 88 | 88 |
| | | |
| Abrasion rate, Grosch², medium severity (mg/km) | 76 | 74 |

It can be seen from Table 8 that the addition of silica in the first non-productive mixing stage (NP1) with the delayed carbon black addition until the second non-productive mixing stage (NP2) for experimental rubber Sample O, resulted in a small improved increased rebound physical property of 69 (indicating a beneficial reduction in hysteresis and hereby reduction in internal heat buildup during service) and small improvement in reduced rate of abrasion of 74 when compared to a value of 76, respectively, for experimental rubber Sample N, in which the carbon black was added in the first non-productive mixing stage (NP1) and a delayed silica addition was made to the second non-productive mixing state (NP2). This is indicative of a desired mixing method (sequence) of providing a delayed carbon black addition subsequent to the silica addition for this rubber composition.

## Claims

1. A pneumatic tire having a circumferential rubber tread comprising a rubber composition comprising, based on parts by weight per 100 parts by weight of the rubber (phr),
(A) 100 phr of diene-based elastomers, and
(B) 40 to 80 phr of a reinforcing filler comprising a combination of carbon black and silica comprising:
(1) 20 to 40 phr of carbon black, and
(2) 20 to 40 phr of silica, wherein the silica is used in combination with a silica coupling agent having a moiety reactive with hydroxyl groups on the silica and another different moiety interactive with carbon-to-carbon double bonds of the diene-based elastomers,
wherein the diene-based elastomers comprise:
(a) from 30 to 50 phr of cis 1,4- polyisoprene rubber having a cis 1,4 isomeric content greater than 92 percent,
(b) 25 to 45 phr of cis 1,4-polybutadiene rubber having a cis 1,4 isomeric content greater than 92 percent, and
(c) 15 to 35 phr of styrene/butadiene rubber having a Tg in a range of from -60°C to -85°C as determined by DSC according to ASTM D7426, and a styrene content of from 14 to 20 percent, wherein the styrene/butadiene rubber comprises:
(i) non-functionalized styrene/butadiene rubber, or
(ii) functionalized styrene/butadiene rubber containing functional groups comprising at least one of siloxy, amine and thiol groups reactive with hydroxyl groups on the silica.

2. The tire of claim 1 wherein the silica is precipitated silica or amorphous synthetic silica and/or wherein the carbon black is rubber reinforcing carbon black.

3. The tire of claim 1 or 2 wherein the rubber tread comprises a radially outer tread cap rubber layer and wherein the tread cap rubber layer comprises the rubber composition.

4. The tire of at least one of the previous claims wherein the tire is a truck tire.

5. The tire of at least one of the previous claims wherein the rubber composition contains from 50 to 70 phr of reinforcing filler comprising:
(A) 25 to 35 phr of carbon black, and
(B) 25 to 35 phr of silica.

6. The tire of at least one of the previous claims wherein the carbon black is **characterized by** having an Iodine adsorption value (ASTM D1510) in a range of 75 to 160 g/kg together with a dibutylphthalate (DBP) value (ASTM D2414) in a range of 90 to 140, cc/100g.

7. The tire of at least one of the previous claims wherein the cis 1,4-polybutadiene rubber is a product of polymerization of 1,3-butadiene monomer in an organic solvent in the presence of a catalyst composed of nickel octoate, triisobutylaluminum, hydrogen fluoride and parastyrenated diphenylamine; or wherein the cis 1,4-polybutadiene rubber is a product of polymerization of 1,3-butadiene monomer in an organic solvent in the presence of a neodymium based catalyst.

8. The tire of at least one of the previous claims wherein the styrene/butadiene rubber is a non-functionalized styrene/butadiene rubber having a styrene content in a range of from 14 to 20 percent and the rubber composition contains from 50 to 70 phr of reinforcing filler comprising:
(A) 25 to 35 phr of carbon black, and
(B) 25 to 35 phr of silica.

9. The tire of at least one of the previous claims 1 to 7 wherein the styrene/butadiene rubber is a functionalized styrene/butadiene rubber having a styrene content in a range from 14 to 20 percent and having at least one functional groups comprising at least one of siloxy, amine and thiol groups reactive with hydroxyl groups of the silica and the rubber composition contains from 50 to 70 phr of reinforcing filler comprising:
(A) 25 to 35 phr of carbon black, and
(B) 25 to 35 phr of silica.

10. The tire of at least one of the previous claims wherein the physical properties of the rubber composition one or several or all of the following properties:
(A) a hot rebound (100°C rebound) of greater than 65;
(B) a Grosch abrasion rate (medium severity) less than 100 mg/km;
(C) a dynamic storage modulus G', 100°C, 10 percent strain, of greater than 1250 kPa, and
(D) a tear strength, 95°C, of greater than 100 Newtons.

11. The tire of at least one of the previous claims wherein the styrene/butadiene elastomer or the functionalized styrene/butadiene elastomer is tin coupled.

12. The tire of at least one of the previous claims wherein the coupling agent comprises a bis-(3-alkoxysilylalkl) polysulfide, preferably a bis-(3-triethoxysilylpropyl) polysulfide, which contains an average from 2 to 4 connecting sulfur atoms in its polysulfidic bridge, or comprises an alkoxyorganomercaptosilane.

13. The tire of at least one of the previous claims wherein the silica is pre-treated with the coupling agent to form a composite thereof prior to addition of this composite to the rubber composition.

14. A method of providing the tire in accordance with at least one of the previous claims wherein the rubber composition is prepared by addition of the silica prior to addition of the carbon black.

15. The method of claim 14 wherein the coupling agent is also added to the rubber composition prior to addition of the carbon black.

## Patentansprüche

1. Luftreifen, der eine umfangsgerichtete Kautschuklauffläche aufweist, umfassend eine Kautschukzusammensetzung, umfassend, auf Basis von Gewichtsteilen je 100 Gewichtsteile des Kautschuks (phr),
(A) 100 phr dienbasierte Elastomere, und
(B) 40 bis 80 phr eines Verstärkungsfüllstoffs, umfassend eine Kombination von Carbon Black und Silika, umfassend:
(1) 20 bis 40 phr Carbon Black, und
(2) 20 bis 40 phr Silika, wobei das Silika in Kombination mit einem Silika-Haftvermittler verwendet wird, der einen mit Hydroxylgruppen an dem Silika reaktiven Anteil und einen anderen, verschiedenen Anteil, der mit Kohlenstoff-Kohlenstoff-Doppelbindungen der dienbasierten Elastomere in Wechselwirkung tritt, aufweist,
wobei die dienbasierten Elastomere umfassen:
(a)30 bis 50 phr cis-1,4-Polyisoprenkautschuk, der einen cis-1,4-Isomergehalt von mehr als 92 Prozent aufweist,
(b)25 bis 45 phr cis-1,4-Polybutadienkautschuk, der einen cis-1,4-Isomergehalt von mehr als 92 Prozent aufweist, und
(c) 15 bis 35 phr Styrol-Butadien-Kautschuk mit einer Tg im Bereich von -60°C bis -85°C, ermittelt durch DSC gemäß ASTM D7426, und einem Styrolgehalt von 14 bis 20 Prozent, wobei der Styrol-Butadien-Kautschuk umfasst:
(i) nicht-funktionalisierten Styrol-Butadien-Kautschuk, oder
(ii) funktionalisierten Styrol-Butadien-Kautschuk, der funktionelle Gruppen enthält, umfassend mindestens eines von Siloxy-, Amin- und Thiolgruppen, die mit Hydroxylgruppen an dem Silika reaktiv sind.

2. Reifen nach Anspruch 1, wobei das Silika ausgefälltes Silika oder amorphes synthetisches Silika ist und/oder wobei das Carbon Black Kautschukverstärkungs-Carbon Black ist.

3. Reifen nach Anspruch 1 oder 2, wobei die Kautschuklauffläche eine radial äußere Laufstreifenoberteil-Kautschukschicht umfasst, und wobei die Laufstreifenoberteil-Kautschukschicht die Kautschukzusammensetzung umfasst.

4. Reifen nach mindestens einem der vorhergehenden Ansprüche, wobei der Reifen ein Lastkraftwagenreifen ist.

5. Reifen nach mindestens einem der vorhergehenden Ansprüche, wobei die Kautschukzusammensetzung 50 bis 70 phr Verstärkungsfüllstoff enthält, umfassend:
(A) 25 bis 35 phr Carbon Black, und
(B) 25 bis 35 phr Silika.

6. Reifen nach mindestens einem der vorhergehenden Ansprüche, wobei das Carbon Black **dadurch gekennzeichnet ist, dass** es einen lodabsorptionswert (ASTM D1510) im Bereich von 75 bis 160 g/kg zusammen mit einem Dibutylphthalat(DBP)-Wert (ASTM D2414) im Bereich von 90 bis 140 cc/100g aufweist.

7. Reifen nach mindestens einem der vorhergehenden Ansprüche, wobei der cis-1,4-Polybutadienkautschuk ein Produkt der Polymerisation von 1,3-Butadienmonomer in einem organischen Lösungsmittel in Gegenwart eines Katalysators, zusammengesetzt aus Nickeloctoat, Triisobutylaluminium, Wasserstofffluorid und p-styroliertem Diphenylamin, ist; oder wobei der cis-1,4-Polybutadienkautschuk ein Produkt der Polymerisation von 1,3-Butadienmonomer in einem organischen Lösungsmittel in Gegenwart eines Neodym-basierten Katalysators ist.

8. Reifen nach mindestens einem der vorhergehenden Ansprüche, wobei der Styrol-Butadien-Kautschuk ein nichtfunktionalisierter Styrol-Butadien-Kautschuk ist, der einen Styrolgehalt im Bereich von 14 bis 20 Prozent aufweist, und die Kautschukzusammensetzung 50 bis 70 phr Verstärkungsfüllstoff enthält, umfassend:
(A) 25 bis 35 phr Carbon Black, und
(B) 25 bis 35 phr Silika.

9. Reifen nach mindestens einem der vorhergehenden Ansprüche 1 bis 7, wobei der Styrol-Butadien-Kautschuk ein funktionalisierter Styrol-Butadien-Kautschuk ist, der einen Styrolgehalt im Bereich von 14 bis 20 Prozent aufweist und mindestens eine funktionelle Gruppe aufweist, die mindestens eines von Siloxy-, Amin- und Thiolgruppen umfasst, die mit Hydroxylgruppen des Silikas reaktiv sind, und die Kautschukzusammensetzung 50 bis 70 phr Verstärkungsfüllstoff enthält umfassend:
(A) 25 bis 35 phr Carbon Black, und
(B) 25 bis 35 phr Silika.

10. Reifen nach mindestens einem der vorhergehenden Ansprüche, wobei die physikalischen Eigenschaften der Kautschukzusammensetzung eine oder mehrere oder alle der folgenden Eigenschaften umfassen:
(A) einen Warmrückprallwert (100°C Rückprall) von größer als 65;
(B) eine Grosch-Abtragsrate (mittlerer Schweregrad) von weniger als 100 mg/km;
(C) einen dynamischen Speichermodul G', 100°C, 10 Prozent Dehnung, von größer als 1250 kPa, und
(D) eine Reißfestigkeit, 95°C, von größer als 100 Newton.

11. Reifen nach mindestens einem der vorhergehenden Ansprüche, wobei das Styrol-Butadien-Elastomer oder das funktionalisierte Styrol-Butadien-Elastomer zinngekoppelt ist.

12. Reifen nach mindestens einem der vorhergehenden Ansprüche, wobei der Haftvermittler ein Bis-(3-alkoxysilylalkyl)polysulfid, bevorzugt ein Bis-(3-triethoxysilylpropyl)polysulfid, umfasst, das einen Durchschnitt von 2 bis 4 verbindenden Schwefelatomen in seiner Polysulfidbrücke enthält, oder ein Alkoxyorganomercaptosilan umfasst.

13. Reifen nach mindestens einem der vorhergehenden Ansprüche, wobei das Silika mit dem Haftvermittler vorbehandelt wird, um einen Verbundwerkstoff davon zu bilden, vor dem Zusetzen dieses Verbundwerkstoffs zu der Kautschukzusammensetzung.

14. Verfahren zur Bereitstellung des Reifens gemäß mindestens einem der vorhergehenden Ansprüche, wobei die Kautschukzusammensetzung durch Zusatz des Silikas vor dem Zusetzen des Carbon Blacks hergestellt wird.

15. Verfahren nach Anspruch 14, wobei auch der Haftvermittler der Kautschukzusammensetzung vor dem Zusetzen des Carbon Blacks zugesetzt wird.

## Revendications

1. Bandage pneumatique possédant une bande de roulement circonférentielle en caoutchouc comprenant une composition de caoutchouc comprenant, basées sur des parties en poids par 100 parties en poids du caoutchouc (phr) :
(A) 100 phr d'élastomères à base diénique ; et
(B) de 40 à 80 phr d'une matière de charge pour le renforcement comprenant une combinaison de noir de carbone et de silice, comprenant :
(1) de 20 à 40 phr de noir de carbone ; et
(2) de 20 à 40 phr de silice ; dans lequel la silice est utilisée en combinaison avec un agent de couplage pour la silice possédant une fraction apte à réagir avec des groupes hydroxyle sur la silice et une autre fraction différente qui entre en interaction avec des liaisons doubles carbone-carbone des élastomères à base diénique ;
dans lequel les élastomères à base diénique comprennent :
(a) de 30 à 50 phr de caoutchouc de 1,4-cis polyisoprène possédant une teneur en isomère 1,4-cis supérieure à 92 % ;
(b) de 25 à 45 phr de caoutchouc de 1,4-cis polybutadiène possédant une teneur en isomère 1,4-cis supérieure à 92 % ; et
(c) de 15 à 35 phr d'un caoutchouc de styrène/butadiène dont la valeur Tg se situe dans une plage de -60 °C à -85 °C comme déterminé par DSC conformément à la norme ASTM D7426 et une teneur en styrène de 14 à 20 % ; dans lequel le caoutchouc de styrène/butadiène comprend :
(i) un caoutchouc de styrène/butadiène non fonctionnalisé ; ou
(ii) un caoutchouc de styrène/butadiène fonctionnalisé contenant des groupes fonctionnels comprenant au moins un groupe choisi parmi des groupes siloxy, des groupes amine et des groupes thiol aptes à réagir avec des groupes hydroxyle sur la silice.

2. Bandage pneumatique selon la revendication 1, dans lequel la silice représente de la silice précipitée ou de la silice synthétique amorphe et/ou dans lequel le noir de carbone représente du noir de carbone pour le renforcement du caoutchouc.

3. Bandage pneumatique selon la revendication 1 ou 2, dans lequel la bande de roulement en caoutchouc comprend une couche de caoutchouc externe en direction radiale faisant office de chape de bande de roulement et dans lequel la couche de caoutchouc faisant office de chape de bande de roulement comprend la composition de caoutchouc.

4. Bandage pneumatique selon au moins une des revendications précédentes, dans lequel le bandage pneumatique est un bandage pneumatique pour camion.

5. Bandage pneumatique selon au moins une des revendications précédentes, dans lequel la composition de caoutchouc contient de 50 à 70 phr d'une matière de charge pour le renforcement comprenant :
(A) de 25 à 35 phr de noir de carbone ; et
(B) de 25 à 35 phr de silice.

6. Bandage pneumatique selon au moins une des revendications précédentes, dans lequel le noir de carbone se **caractérise par le fait qu'**il possède une valeur d'adsorption d'iode (norme ASTM D1510) dans une plage de 75 à 160 g/kg conjointement avec une valeur de phtalate de dibutyle (DBP) (norme ASTM D2414) dans une plage de 90 à 140 cm³/100 g.

7. Bandage pneumatique selon au moins une des revendications précédentes, dans lequel le caoutchouc de 1,4-cis polybutadiène représente un produit de polymérisation d'un monomère de 1,3-butadiène dans un solvant organique en présence d'un catalyseur qui se compose d'octoate de nickel, de triisobutylaluminium, de fluorure d'hydrogène et de diphénylamine parastyrénée ; ou dans lequel le caoutchouc de 1,4-cis polybutadiène représente un produit de polymérisation d'un monomère de 1,3-butadiène dans un solvant organique en présence d'un catalyseur à base de néodyme.

8. Bandage pneumatique selon au moins une des revendications précédentes, dans lequel le caoutchouc de styrène/butadiène représente un caoutchouc non fonctionnalisé de styrène/butadiène possédant une teneur en styrène dans une plage de 14 à 20 % et la composition de caoutchouc contient de 50 à 70 phr d'une matière de charge pour le renforcement comprenant :
(A) de 25 à 35 phr de noir de carbone ; et
(B) de 25 à 35 phr de silice.

9. Bandage pneumatique selon au moins une des revendications précédentes 1 à 7, dans lequel le caoutchouc de styrène/butadiène représente un caoutchouc fonctionnalisé de styrène/butadiène possédant une teneur en styrène dans une plage de 14 à 20 % et possédant au moins un groupe fonctionnel comprenant au moins un groupe choisi parmi des groupes siloxy, des groupes amine et des groupes thiol aptes à réagir avec des groupes hydroxyle sur la silice et la composition de caoutchouc contient de 50 à 70 phr d'une matière de charge pour le renforcement comprenant :
(A) de 25 à 35 phr de noir de carbone ; et
(B) de 25 à 35 phr de silice.

10. Bandage pneumatique selon au moins une des revendications précédentes, dans lequel les propriétés physiques de la composition de caoutchouc représentent une ou plusieurs des propriétés indiquées ci-après ou encore la totalité desdites propriétés, à savoir :
(A) un rebond à chaud (rebond à 100 °C) supérieur à 65 ;
(B) un taux d'abrasion de Grosch (sévérité moyenne) inférieure à 100 mg/km ;
(C) un module de stockage dynamique G', à 100 °C, à une déformation de 10 %, supérieur à 1250 kPa ; et
(D) une résistance au déchirement, à 95 °C, supérieure à 100 Newtons.

11. Bandage pneumatique selon au moins une des revendications précédentes, dans lequel l'élastomère de styrène/butadiène ou l'élastomère fonctionnalisé de styrène/butadiène est couplé à l'étain.

12. Bandage pneumatique selon au moins une des revendications précédentes, dans lequel l'agent de couplage comprend un bis 3-(alcoxysilylalkyl) polysulfure de préférence un bis-(3-triéthoxysilylpropyl) polysulfure qui contient en moyenne de 2 à 4 atomes de soufre de liaison dans son pont polysulfure, ou comprend un alcoxyorganomercaptosilane.

13. Bandage pneumatique selon au moins une des revendications précédentes, dans lequel la silice est soumise à un prétraitement avec l'agent de couplage pour obtenir un composite de ladite silice et dudit agent avant l'addition dudit composite à la composition de caoutchouc.

14. Procédé de progression du bandage pneumatique selon au moins une des revendications précédentes, dans lequel la composition de caoutchouc est préparée par addition de la silice avant l'addition du noir de carbone.

15. Procédé selon la revendication 14, dans lequel l'agent de couplage est également ajouté à la composition de caoutchouc avant l'addition du noir de carbone.
